# EUROPEAN PATENT APPLICATION

(11) **EP 4 851 594 A1**
(43) Date of publication of application: **09.12.2026**
(21) Application number: 26172612.9
(22) Date of filing: 15.04.2026
(51) Int. Cl.: G01J 11/00, G01J 3/18, G01J 3/28, G02B 5/18, G02B 27/09, G02B 27/44

(54) **SYSTEM AND METHOD FOR INTRODUCING A VARIABLE LARGE AMOUNT OF DISPERSION TO A LIGHT BEAM**

(30) Priority: 15.04.2025 PT 2025120213
(71) Applicant: Sphere Ultrafast Photonics, S.A., 4169-007 Porto (PT)
(72) Inventor: CORD LOUIS, ARNOLD, 22100 Lund (SE); DIAZ RIVAS, DANIEL, 22100 Lund (SE); DA COSTA RIBEIRO DE MIRANDA, MIGUEL NICOLAU, 4169-007 PORTO (PT); CHEN, GUO, 22100 LUND (SE); PAIVA REBELO CEREJO CRESPO, ELDER MANUEL, 4169-007 PORTO (PT); FERRAZ MEIRA GUERREIRO, PAULO TIAGO, 4169-007 PORTO (PT); VIOTTI, ANNE-LISE, 22100 LUND (SE); SYTCEVICH, IVAN, 22100 LUND (SE); OLIVEIRA AMORIM, VÍTOR ALEXANDRE, 4169-007 PORTO (PT); ROMERO MUNIZ, ROSA MARIA, 4169-007 PORTO (PT); NORONHA DA CANHOTA, MIGUEL, 4169-007 PORTO (PT)
(74) Representative: Patentree

(57) **Abstract**

The present invention generally relates to laser systems and laser pulse measurement. It comprises a method and system for applying spatial dispersion to ultrashort laser pulses. An embodiment of the system comprises a dispersive system with diffraction gratings for applying a much larger amount of dispersion to an ultrashort pulse compared to bulk materials. This enables measuring laser pulses with both broadband and narrowband spectra over a large range of laser pulse temporal durations. The innovation consists in that the dispersive system can impart a continuously variable large amount of dispersion to a laser pulse in parallel and distributed in space, or sequentially. This dispersion can vary from negative to positive or vice-versa. This invention can be used in scanning or single-shot operation with the proper embodiment. This invention can also be used for dispersion characterization of optical components.

## Description

### TECHNICAL FIELD OF THE INVENTION

The present invention relates to a method and compact device for applying large variable dispersion to ultrashort laser pulses, in parallel along a spatial dimension, or sequentially.

### SUMMARY

Diffraction gratings are among the most fundamental optical elements and are used in a wide range of applications. In ultrafast optics, they play a central role in laser pulse stretchers, compressors and 4f spectral shapers, where they are used to manipulate the spectral phase of coherent ultrashort light pulses. In this invention, we describe an unrecognized effect related to diffraction from a grating, which results in a spatially varying dispersion applied to an ultrashort light pulse. This effect is explained using two different theoretical models based on wave and geometric optics. As an application of spatiotemporal dispersion from gratings, we propose a novel single-shot dispersion based temporal pulse measurement, as well as a new scanning configuration. These approaches enable measurement of longer pulse durations, ranging from 4 to 500 fs, beyond the limits of existing implementations of dispersion scan.

### BACKGROUND

The diffraction grating is one of the fundamental building blocks of optics, widely used in countless optical technologies, such as spectrometers [1]. In particular, the field of ultrafast optics has benefited greatly from the use of gratings. For example, the ability of gratings to spatially separate the different frequencies of light is used to control the spectral and temporal properties of pulses in 4f spectral pulse shapers [2]. Another property that has been exploited is the frequency dependent path length originated by different frequencies traveling at different angles after diffracting from a grating. This effect, known as angular dispersion, has been applied to pulse stretching and compression schemes based on diffraction gratings [3,4], which today are present in almost every ultrafast laser system.

Due to the combination of spatial and temporal propagation effects, diffraction gratings are a well-known source of spatio-temporal couplings (STCs). In particular, angular dispersion from a grating is responsible for two primary STCs, namely, spatial chirp and pulse-front tilt [5, 6]. Spatial chirp, also known as spatial dispersion, is related to the displacement of the spectrum along a direction transverse to propagation of light. The second effect, pulse-front tilt (PTF), is associated to the arrival time of the pulse being a function of the position in any plane perpendicular to the propagation of light. Even if these effects are usually undesired misalignments of stretchers and compressors, some applications have been developed to make use of them. Two examples are spatio-temporal focusing microscopy and tilted-pulse-front terahertz excitation [7,8].

The dispersion-scan technique (d-scan) emerged in 2012 as a straightforward method for the characterization of ultrashort laser pulses [9,10]. Its working principle consists in manipulating the spectral phase of the pulse to be measured and simultaneously recording the spectrum of a nonlinear signal. The measured spectrogram is a unique representation of the pulse, enabling the retrieval of the spectral phase through iterative inverse retrieval algorithms [11]. Besides the most typical implementation using glass wedges, different types of dispersive elements have been used to introduce greater dispersion such as: prism and grating compressors [12,13], chirped fiber Bragg gratings [14] and acousto-optic programmable dispersion filters [15]. A d-scan trace can be recorded also in single shot, if varying amounts of dispersion are introduced for different parts of the beam and an imaging spectrometer is used to obtain the spectrum of each point along this direction. Different approaches have been used for single-shot d-scan, such as transmission through a wedge prism [16,17], transmission through a transverse second-harmonic generation crystal (TSHG) [18], and more recently multiple reflections in a glass plate [19,20].

All these implementations share the use of material dispersion as a means of manipulating the spectral phase. The dispersion range required for a successful d-scan retrieval scales quadratically with pulse duration. While 600fs² of GDD can be sufficient to record a SHG d-scan trace that can straightforwardly be retrieved for a 10 fs near-transform-limited pulse, 240 × 10³fs² would be needed for a pulse with a transform-limit of 200 fs. Furthermore, physical limitations such as total internal reflection and absorption have made it very difficult to increase the dispersion range, which has limited the maximum measurable pulse duration (so far 100 fs with multiple passes on a plate [20]). Moreover, all of the above techniques require dispersion pre-compensation, usually implemented with the help of chirped mirrors.

### GENERAL DESCRIPTION OF THE INVENTION

The disclosure includes an optical system for applying variable large amounts of dispersion to a laser pulse beam, either in parallel over the laser pulse beam, or sequentially to a portion of the laser pulse beam.

In an embodiment, the optical system applies variable large amounts of dispersion in parallel along the spatial profile of the laser pulse beam so as to introduce a spatially dependent dispersion along said laser pulse beam.

In an embodiment, the optical system applies in parallel variable large amounts of dispersion along the laser pulse beam so as to introduce a spatially dependent dispersion to said laser pulse beam, between an input surface and an output surface of said optical system.

In an embodiment, the optical system, comprises (i) a dispersive optical element for introducing angular dispersion to the laser pulse beam and (ii) an imaging section with its optical axis aligned with the propagation direction of the angularly dispersed laser pulse beam, that images an object plane into an image plane, wherein the object and image planes are parallel with respect to each other, perpendicular to the optical axis of said imaging section, and related by an optical imaging relationship.

In an embodiment, the dispersive optical element of the optical system comprises one or more surfaces where angular dispersion of the laser pulse beam occurs.

In an embodiment, the first surface of the dispersive optical element where angular dispersion occurs in the optical system, is deliberately positioned at a non-zero angle with respect to the object plane of the imaging section, thereby generating a non-trivial, spatially dependent dispersion in the laser pulse beam along an output surface coaxial with the optical axis of the imaging section and hence locally parallel to the image plane.

In an embodiment, the first surface of the dispersive optical element where angular dispersion occurs in the optical system is parallel to the object plane of the imaging section, thereby generating a non-trivial, spatially dependent dispersion in the laser pulse beam along an output surface non-coaxial with the optical axis of the imaging section and hence locally tilted with respect to the image plane.

In an embodiment, the dispersive optical element of the optical system comprises a flat transmissive diffraction grating, flat reflective diffraction grating, curved transmissive diffraction grating, curved reflective diffraction grating, circular grating, diffractive axicon, prism, grism, wedge, plate, and combinations thereof.

In an embodiment, the imaging section of the optical system comprises one or more focusing optical elements.

In an embodiment, the imaging section of the optical system comprises a single lens or a single focusing mirror.

In an embodiment, the object plane, the imaging section and the image plane of the optical system are configured as a 4f imaging system.

In an embodiment, the imaging section of the optical system comprises a cylindrical lens and a spherical lens or a cylindrical focusing mirror and a spherical focusing mirror, or combinations thereof, to image the object plane onto the output surface along a direction coplanar with the angular dispersion and to focus the angularly dispersed laser pulse beam onto the output surface in the orthogonal direction, hence producing a narrow, line-like image.

In an embodiment, a system for single-shot temporal measurement of a laser pulse beam comprises (i) an optical system according to previous embodiments, or combinations thereof, for applying spatially dependent dispersion to the laser pulse beam along an output surface; (ii) a nonlinear section for applying in parallel a nonlinear optical process to the laser pulse beam along the output surface of the previous optical system, to obtain a dispersion-dependent nonlinear signal; (iii) a sensor for recording in single-shot, by an analyzing means, the two-dimensional dataset comprising the spectra of the dispersion-dependent nonlinear signal of the previous nonlinear section as a function of position; (iv) a processing module comprising one or more processors configured for executing a numerical iterative algorithm, to said recorded single-shot two-dimensional dataset to retrieve the phase and, optionally, the amplitude of the electric field of the laser pulse beam.

The disclosure also includes a method for introducing, in parallel, a spatially dependent dispersion to a laser pulse beam, the method comprising: (i) introducing angular dispersion to the laser pulse beam via an optical means, wherein said angular dispersion occurs either (a) in transmission at a surface traversed by the laser pulse beam, or (b) in reflection at a surface upon which the laser pulse beam impinges; (ii) imaging an object plane onto an image plane, said planes being perpendicular to the axis defined by the propagation of the angularly dispersed laser pulse beam, thereby producing a spatially dependent dispersion in said laser pulse beam along a surface, wherein said spatially dependent dispersion arises when the optical means and/or the surface are tilted with respect to the object plane and the image plane, respectively; (iii) selecting the range and sign of the introduced dispersion to be entirely negative, entirely positive, or varying from negative to positive, or vice versa, by adjusting the signed distance and angle between the object plane and the surface at which angular dispersion is introduced, with said distance being measured along the axis defined by the propagation of the angularly dispersed laser pulse beam.

The disclosure also includes a method for single-shot temporal measurement of a laser pulse beam, comprising the following steps: (i) introducing a spatially dependent dispersion to the laser pulse beam along a surface, according to the method described in the previous paragraph; (ii) applying a nonlinear optical process to the beam resulting from the previous step along said surface; (iii) recording a two-dimensional dataset in single-shot, said dataset comprising the spectrum of the nonlinear signal generated for each different spatially dependent dispersion in the laser pulse beam; and (iv) calculating, by an electronic data processor, a numerical iterative algorithm to said recorded single-shot two-dimensional dataset to retrieve the phase and, optionally, the amplitude of the electric field of the laser pulse beam.

In an embodiment, an optical system according to previous descriptions, for introducing variable large amounts of dispersion, sequentially to a laser pulse beam, said optical system comprising a means for translating the imaging section along its optical axis, thereby generating a translation-dependent dispersion at the output surface of said optical system for each position of said imaging section.

In an embodiment, an optical system according to previous descriptions, for introducing variable large amounts of dispersion, sequentially to a laser pulse beam, said optical system comprising a means for translating the dispersive element along the optical axis of the imaging section, thereby generating a translation-dependent dispersion at the output surface of said optical system for each position of said dispersive element.

In an embodiment, a system for temporal measurement of a laser pulse beam, comprising: (i) the optical system according to previous descriptions, for applying translation-dependent dispersion to the laser pulse beam; (ii) a nonlinear section for applying a nonlinear optical process to the laser pulse beam at the output surface of the previous optical system; (iii) a sensor for recording, sequentially, by an analyzing means, the two-dimensional dataset comprising the spectra of the translation-dependent nonlinear signal of the previous nonlinear section for each position of the imaging section or the dispersive optical element in said optical system; (iv) a processing module comprising one or more processors configured for executing a numerical iterative algorithm, to said recorded two-dimensional dataset, to retrieve the phase and, optionally, the amplitude of the electric field of the laser pulse beam.

In an embodiment, an additional diffractive optical element is placed at the output surface of the optical system and an additional focusing element is placed between said additional diffractive optical element and the nonlinear section of said optical system, and said nonlinear section is placed at the focal plane of the additional focusing element.

In an embodiment, the additional diffractive element of the system comprises a flat transmissive diffraction grating, flat reflective diffraction grating, curved transmissive diffraction grating, curved reflective diffraction grating, circular grating, diffractive axicon, prism, grism, wedge, plate, and combinations thereof, and the focusing element comprises a lens, mirror, diffractive lens, holographic optical element, or combinations thereof.

In an embodiment, the additional diffractive optical element of the system is replaced by a mirror placed in the Fourier plane of the imaging section of said system, so as to obtain a folded configuration optically equivalent to the system described in [25] and [26] but using a single diffractive element.

The disclosure also includes a method for introducing, sequentially, variable dispersion to a laser pulse beam, comprising: (i) introducing angular dispersion to the laser pulse beam via an optical means, wherein said angular dispersion occurs either (a) in transmission at a surface traversed by the laser pulse beam, or (b) in reflection at a surface upon which the laser pulse beam impinges; (ii) imaging an object plane onto an image plane, said planes being perpendicular to the axis defined by the propagation of the angularly dispersed laser pulse beam; (iii) adjusting, sequentially, the signed distance between the object plane and the surface at which angular dispersion is introduced, with said signed distance being measured along the axis defined by the propagation of the angularly dispersed laser pulse beam, to produce a translation-dependent dispersion in said laser pulse beam along a surface, wherein the range and sign of the introduced dispersion can be made entirely negative, entirely positive, or varying from negative to positive, or vice versa, by adjusting said signed distance.

The disclosure also includes a method for temporal measurement of a laser pulse beam, comprising the following steps: (i) introducing a translation-dependent dispersion to the laser pulse beam at a surface, according to the method described in the previous claim; (ii) applying a nonlinear optical process to the beam resulting from the previous step at said surface; (iii) recording, sequentially, a two-dimensional dataset comprising the spectrum of the nonlinear signal generated for each translation-dependent dispersion in the laser pulse beam; and (iv) calculating, by an electronic data processor, a numerical iterative algorithm to said recorded two-dimensional dataset to retrieve the phase and, optionally, the amplitude of the electric field of the laser pulse beam.

The disclosure also includes a system for measuring the dispersion properties of optical components, comprising: (i) an optical interferometer with two arms that uses a broadband light source; (ii) a means for mounting an optical component in one of the arms of the interferometer; (iii) a section, for introducing a translation-dependent dispersion in one of the arms of the interferometer; (iv) a sensor for recording an interferogram produced by light propagating in the two arms of the interferometer; (v) a processing module comprising one or more processors configured for executing a numerical algorithm, to said recorded interferogram, to obtain the dispersion characteristics of the optical component from the recorded interferogram.

The disclosure also includes a method for measuring the dispersion properties of optical components using an optical interferometer with two arms, comprising: (i) introducing an optical component in a first arm of an optical interferometer; (ii) introducing a translation-dependent dispersion, either (a) in the first arm, or (b) in the second arm of the interferometer, said translation-dependent dispersion adjusted to balance the dispersion between the two arms of the interferometer; (iii) recording an interferogram resulting from the interference of light propagating in said two arms as a function of delay between said two arms, or, alternatively, recording an interferogram resulting from the interference of light propagating in said two arms as a function of the translation-dependent dispersion introduced into one of the arms; (iv) calculating, by an electronic data processor, a numerical algorithm to said recorded interferogram to obtain the dispersion of the optical component.

### BRIEF DESCRIPTION OF THE DRAWINGS

The following figures provide preferred embodiments for illustrating the description and should not be seen as limiting the scope of invention.
Figure 1: Schematic diagram showing a beam being diffracted by a grating.
Figure 2: Ray-tracing diagrams showing different wavelengths diffracted by a grating: (a) illustration showing that the path difference between the three wavelengths arriving at points *A* and *B* is different; (b) illustration showing the parameters for calculating the phase at an arbitrary point *P*.
Figure 3: Schematic diagram of the 4f-setup: (a) top-view; (b) side-view.
Figure 4: Schematic diagram of the 4f-setup for a scanning configuration, to apply translation-dependent dispersion to a laser pulse.
Figure 5. Scanning version implementation to apply translation-dependent dispersion to a laser pulse.
Figure 6. A simple system for introducing dispersion. (a) By translating the second grating the system can introduce negative and positive dispersion. (b) By folding the system, and translating the imaging telescope instead of the second grating, the output beam alignment remains unchanged. The light shaded beam and grating represent the image of the input beam and grating seen from the point of view of the recombination grating (which is actually the same grating, of course).
Figure 7. Practical implementation of a mirror-based folded system for introducing dispersion. (a) Top view and (b) side view. Moving parts are highlighted by the dashed lines. The input and input beams are at different height. On the side view figure, only the central wavelength is shown for clarity. Output beam has, in general, spatial chirp. Angles are exaggerated for dramatic effect.
Figure 8. (a) Illustration of the experimental setup to measure 170 fs pulses in single shot acquisition from Pharos laser. (b) Illustration of the experimental setup to measure 50-100 fs pulses after post-compression in a multi-pass cell.
Figure 9. Left: measured and Right: retrieved 2D traces in single shot acquisition for a 170 fs TFL pulse duration
Figure 10. Starting from the left. Columns 1 and 2: measured (left) and retrieved (right) 2D traces in single shot acquisition. Columns 3 and 4: Retrieved pulse in the spectral (left) and temporal domain (right).
Figure 11. Measurement of the MPC stage 1 compressor in scanning mode. This scan uses all available range of the translation stage. The pulses are at 100 fs FWHM.
Figure 12. Measurement of the MPC stage 2 compressor in scanning mode. This scan uses a translation range of ±2 mm. Measured pulse duration is 7.6 fs FWHM. of ultrashort pulse characterization based on the d-scan technique that has a scanning range higher than previous implementations.
Figure 13. Schematic diagram of a double-pass grating compressor.
Figure 14. Graphic representation of an embodiment of the system for applying spatially-dependent dispersion and translation-dependent dispersion.
Figure 15. Graphic representation of another embodiment of the system for applying spatially-dependent dispersion and translation-dependent dispersion.
Figure 16. Graphic representation of an embodiment of a system for temporal measurement of a laser pulse beam, in single shot mode or scanning mode.
Figure 17. Graphic representation of another embodiment of a system for temporal measurement of a laser pulse beam, in single shot mode or scanning mode.

### DETAILED DESCRIPTION

Material dispersion is commonly used as a means of manipulating the spectral phase of ultrashort laser pulses. In the present invention, we use dispersive optical elements and an imaging system to achieve a spatially varying dispersion range or spatially dependent dispersion. Furthermore, we can achieve spatially-dependent dispersion in single shot operation and translation-dependent dispersion if we operate in a sequential mode, depending of the preferred implementation.

In order to explain these two concepts, spatially-dependent dispersion and translation-dependent dispersion, we will employ as a case study a particular dispersive element: a diffraction grating.

The origin of spatio-temporal dispersion introduced by a grating is a consequence of diffraction. To understand this, we will present a wave optics description of the problem. After, we provide a geometrical optics model that we have used to calculate the spectral phase of a pulse after the grating at any point in space.

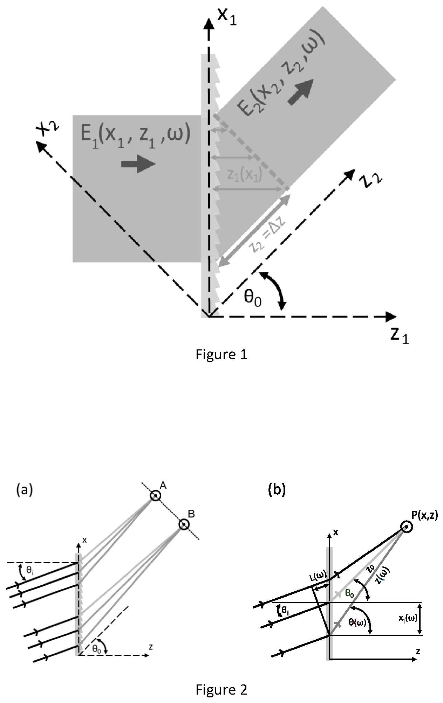

An ultrashort pulse with spectral amplitude *A*(*ω*) impinges on a transmission grating with a grating period Λ at normal incidence. Diffraction, angular chirp and PFT will be observed [21]. Fig. 1 illustrates the scenario with the relevant coordinate systems, where the *x*₁-direction is in the plane of the grating and the *z*₁-direction is along the grating normal; the *x*₂-direction is perpendicular to the propagation direction after the grating, defined by the central wavelength diffraction angle (*θ*₀) and the z₂-direction is along the propagation direction.

We can use the grating equation, i.e. sin $\left({θ}_{q}\left(ω\right)\right) = sin \left({θ}_{i}\right) + q \frac{2 πc}{ω Λ}$*,* where *θᵢ* is the incidence angle and *q* is the diffraction order, to calculate the diffraction angle *θ_{q}*(*ω*). Oscar Martinez was the first to point out that the angular dispersion produced by prisms or gratings always results in anomalous second order dispersion [22], a fact that will become important in the following. While the problem can be treated with beams of finite transverse size, we have assumed plane waves for the sake of simplicity. After the grating, we can represent the electric field as:
$E \left({z}_{1}, {x}_{1}, ω\right) = A \left(ω\right) {e}^{iϕ \left({z}_{1}, {x}_{1}, ω\right)}$ ()

Upon propagation, each frequency component acquires a phase (*ϕ*) given the the scalar product between the vectors representing wavenumber (*̅k̅*̅) and position (*̅r̅*̅) :
$ϕ \left({x}_{1}, {z}_{1}, ω\right) = \vec{k} ⋅ \vec{r} = {k}_{{z}_{1}} {z}_{1} + {k}_{{x}_{1}} {x}_{1} = {kz}_{1} cos θ \left(ω\right) + {kx}_{1} sin θ \left(ω\right)$ (2)

This expression can be rewritten in terms of *z*₂ and *x*₂ by rotating the coordinate system by an angle *θ*₀ :
$ϕ \left({x}_{2}, {z}_{2}, ω\right) = k ⋅ \left[{z}_{2} cos\left(θ-{θ}_{0}\right)+{x}_{2} sin\left(θ-{θ}_{0}\right)\right]$ (3)

We are interested in obtaining an analytical expression for the GDD in this new coordinate system. For that, we perform the second derivative of the phase against the angular frequency:
$ϕ " \left({x}_{2}, {z}_{2}, ω\right) = \frac{{d}^{2} ϕ}{{dω}^{2}} = {z}_{2} \left[-\frac{2}{c}sin\left(θ-{θ}_{0}\right)θ′-\frac{ω}{c}cos\left(θ-{θ}_{0}\right)θ{′}^{2}-\frac{ω}{c}sin\left(θ-{θ}_{0}\right)θ"\right]$ (4)

Evaluating this expression at the central frequency, the equation simplifies to: $ϕ " \left({x}_{2}, {z}_{2}, {ω}_{0}\right) = {z}_{2} \left(-\frac{{ω}_{0}}{c}{\left(θ′\left({ω}_{0}\right)\right)}^{2}\right) + {x}_{2} \left(\frac{2}{c}θ′\left({ω}_{0}\right)+\frac{{ω}_{0}}{c}θ"\left({ω}_{0}\right)\right)$ (5)

The derivatives of the diffraction angle can be calculated analytically:
$θ ′ \left({ω}_{0}\right) = \frac{dθ}{dω} \left({ω}_{0}\right) = - q \frac{2 πc}{{ω}_{0}^{2} Λcos \left({θ}_{0}\right)}$ (6)
$θ " \left({ω}_{0}\right) = - q \frac{2 πc}{Λ} \left(-\frac{2}{{ω}_{0}^{3} cos \left({θ}_{0}\right)}+\frac{tan \left({θ}_{0}\right)}{{ω}_{0}^{2} cos \left({θ}_{0}\right)}θ′\left({ω}_{0}\right)\right) = - \frac{2}{{ω}_{0}} θ ′ \left({ω}_{0}\right) + tan \left({θ}_{0}\right) {\left(θ′\left({ω}_{0}\right)\right)}^{2}$ (7)

Substituting into Eq. 5, we obtain:
$ϕ " \left({x}_{2}, {z}_{2}, {ω}_{0}\right) = {z}_{2} \left(-\frac{{ω}_{0}}{c}{\left(θ′\left({ω}_{0}\right)\right)}^{2}\right) + {x}_{2} \left(\frac{{ω}_{0}}{c}tan\left({θ}_{0}\right){\left(θ′\left({ω}_{0}\right)\right)}^{2}\right)$ (8)

We have split Eq. 8 into two terms, one multiplied by *z*₂ and the other by *x*₂. The first term is always negative and corresponds to the acquired GDD in the propagation direction, a result that agrees with that obtained by Oscar Martinez [4]. The second term is proportional to the first, by a factor -tan (*θ*₀). This term cancels out when the beam is diffracted to *θ*₀ = 0° with respect to the grating normal. Otherwise, this term is nonzero, demonstrating the presence of spatially-dependent group delay dispersion, or spatially-dependent dispersion, in any plane perpendicular to the propagation of the diffracted light that is not parallel to the grating plane.

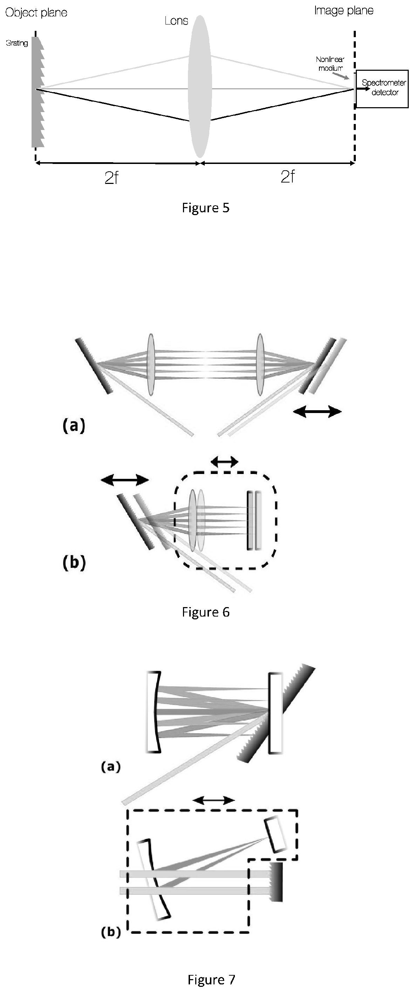

The calculation of the spectral phase can also be performed following a geometrical optics approach. This follows the simple idea that the phase is proportional to the optical path length (*ϕ* = *k* · *L*). Figure 5a shows a schematic where a collimated beam is incident on a grating at an arbitrary angle *θᵢ*.

After the grating, different frequencies are diffracted at different angles, represented here with differently grey tone rays. From this diagram, it is clear that in any plane not parallel to the grating, the phase will become a function of space due to the different propagation distance from the grating.

As illustrated in figure 2 b, the phase at an arbitrary point P depends not only on the difference in propagation distance after the grating, but also on the difference in propagation distance from a constant phase plane (represented as a dotted black line) before the grating. The path length difference relative to the center wavelength, before and after the grating, can be calculated using simple geometrical relations. This gives rise to the first two terms in equation 6:
$ϕ \left(P, ω\right) = k \left(ω\right) ⋅ \left({x}_{i}\left(ω\right)sin \left({θ}_{i}\right)+{z}_{0}\frac{cos \left({θ}_{0}\right)}{cos \left(θ\left(ω\right)\right)}\right) + {ϕ}_{g} \left(ω\right)$ (6)
where,
${ϕ}_{g} \left(ω\right) = π + m \frac{{x}_{i} \left(ω\right)}{Λ} 2 π$ (7)
${x}_{i} \left(ω\right) = {z}_{0} sin \left({θ}_{0}\right) \left(1-\frac{tan \left(θ\left(ω\right)\right)}{tan \left({θ}_{0}\right)}\right)$ (8)

In these equations, *z*₀ represents the traveled distance from the grating to point *P* for the central frequency, *θᵢ* and *θ*₀ correspond to the incidence angle on the grating and the exit angle for the central frequency, respectively, *xᵢ*(*ω*) is the separation relative to the central frequency in the grating plane, *ϕ_{g}*(*ω*) is an additional phase term, known in other works as the grating phase [23], which is needed in order to account for the rotation of the wavefront after the grating.

Dispersion, e.g. in terms of group delay dispersion (GDD) or third-order dispersion (TOD), can be simply calculated by differentiating the spectral phase against the angular frequency:
${GDD}_{0} = \frac{{\partial }^{2} ϕ}{\partial {ω}^{2}} \left({ω}_{0}\right) {TOD}_{0} = \frac{{\partial }^{3} ϕ}{\partial {ω}^{3}} \left({ω}_{0}\right)$ (9)

This geometrical model provides a complete calculation of the phase at any point in space. We have used this model to find the optimum parameters (grating line density, angle of incidence, etc.) for our single-shot and scanning experiments as well as for the retrieval of the spectral phase of the measured pulses.

### The single shot version of the invention

As we have illustrated in the previous section, in any plane not parallel to the grating, there is a position-dependent spectral phase or spatially-dependent dispersion. As we will show later, the main advantage of angular dispersion compared to material dispersion is that a large variation of GDD can be encoded in a much smaller portion of space.

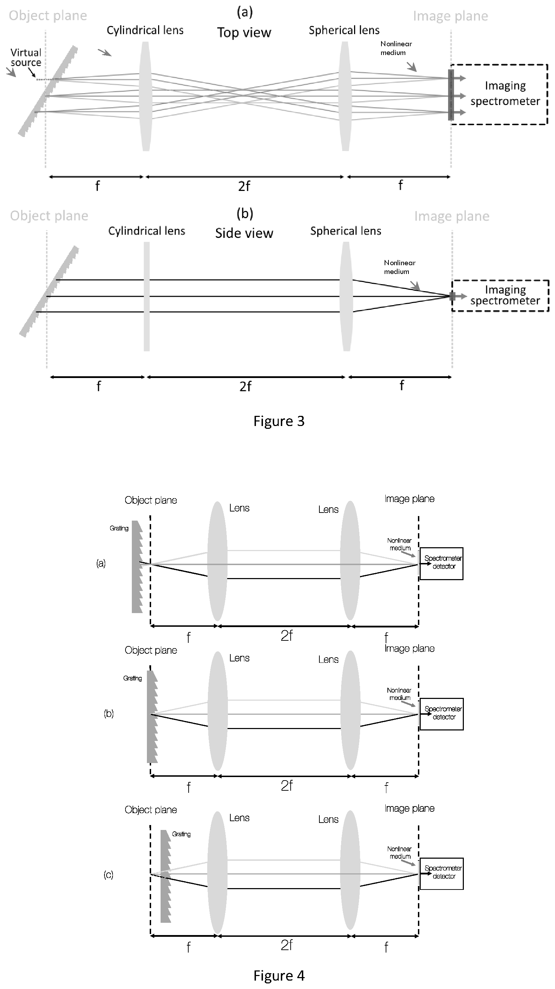

Figure 3 shows a particular implementation impart spatially-dependent dispersion to a laser pulse using a dispersive optical element and an imaging system in a 4f configuration. In this configuration, which relies on imaging, it is possible to apply both positive and negative GDD to a laser pulse. With this particular implementation, the laser pulse that reaches the diffraction grating is imaged into the image plane. More precisely, points located on the object plane are imaged onto the image plane. This means that the points in the object plane located at the left of the diffraction grating would effectively act as a virtual source where the GDD is positive, while the points to the right of the grating are real sources where the GDD is negative. Therefore, if the dispersive element is also placed in an imaging system, we have demonstrated a solution for applying both positive and negative GDD that relies on imaging.

If a nonlinear medium is located at the image plane, the laser pulse at this image plane has a spatially dependent dispersion, therefore a nonlinear signal can be generated as a function of the spatially dependent dispersion. If an imaging spectrometer is used for recording the 2D trace corresponding to the spectrum of the nonlinear signal as a function of dispersion, it is possible to measure the electric field of a laser pulse in single shot operation.

To achieve a strong nonlinear signal, the driving pulse must reach a sufficiently high intensity at the crystal position. By combining a cylindrical and a spherical lens (Figure 3), we can perform imaging in the horizontal direction (where diffraction occurs) while focusing the beam onto a line in the vertical direction, as shown in Figure 3b. This configuration poses an additional advantage. By arranging the two lenses in a 4f configuration, we ensure that the beam divergence after the image plane is the same as at the grating exit, thereby reducing the numerical aperture requirement of the imaging spectrometer. At this stage we will be able to produce a nonlinear signal as a function of dispersion in the SGH crystal that is positioned at the image plane (Figure 3a). Therefore, we will be able to record a 2D trace in the imaging spectrometer, where we will measure, in this particular case, the second harmonic signal as a function of position on the SGH crystal. Each position on the SHG crystal has suffered a different amount of dispersion, due to the spatially dependent dispersion. With the help of a retrieval algorithm applied to the measurement, it is possible to retrieve the amplitude and phase of the ultrashort laser pulse under analysis.

### The scanning version of the invention

Furthermore, it is possible to achieve variable dispersion in the image plane by changing the position of the grating along the optical axis of the 4f imaging system relative to the object plane, achieving translation-dependent dispersion.

Instead of capturing a 2D trace in single shot with an imaging spectrometer, the nonlinear signal generated in the imaging plane - within a nonlinear medium - can be recorded using a standard spectrometer while varying the grating's position along the optical axis. In this particular implementation of scanning mode, a 2D trace is constructed by measuring the second harmonic signal as the grating is moved along the optical axis on the 4f imaging system. If the grating is behind the object plane, negative dispersion is applied to the laser pulse (Figure 4a). If the grating is after the object plane, positive GDD is applied to the laser pulse (Figure 4c), as we are imaging a virtual source in a 4f configuration. This concept allows the variable dispersion system to apply positive and negative dispersion to the laser pulse, by moving the grating around the object plane along the optical axis of the 4f implementation. Notice that the grating has been placed parallel to the object plane, for better understanding of the geometrical optics, but in a general case it would tilted to the object plane. For simplicity, in this particular configuration we are looking at a small area (an approximate point) and not to the whole image plane, where translation-dependent dispersion of the laser pulse is achieved.

As before, the amplitude and phase of the ultrashort laser pulse under analysis can be retrieved using an appropriate retrieval algorithm.

A minimum configuration for this scanning application is illustrated in Figure 5, where only one focusing element is used in the 2f-2f configuration.

Another possible implementation in a basic 4f system for introducing variable dispersion is shown in Figure 6a. Let us assume an initial position such that the image of the first grating coincides with the position of the second grating. In this situation the system would not introduce any dispersion.

The system has a unity magnification not only in the transverse direction, but also in the longitudinal direction, therefore a displacement of the first grating by an amount *z* moves its image by the same amount *z*. If the image of the first grating is in a position such that the distance between the image and the second grating is positive (i.e., the light coming from the image of the first grating to the second grating has its different wavelengths diverging), then the system introduces negative dispersion, the same way a typical two-grating compressor would [3]. Otherwise, the system introduces positive dispersion. The latter condition requires an imaging system (because the image of the first grating is virtual) and is the one typically used in pulse stretchers. This configuration also has the advantage of removing, in the second grating, the angular dispersion of the laser beam, providing a laser beam that has residual spatial chirp. This is important in the generation of the nonlinear signal when this laser beam propagates through a nonlinear material after applying this translation-dependent varying dispersion.

A more compact approach is to implement a folded 4f configuration as shown in Figure 7. In this case, moving the grating by an amount *z* translates to changing the equivalent inter-grating distance by 2*z*. Other configurations could also be used, for example an Öffner triplet [24].

The dispersion parameters of the system can be easily calculated (see e.g. [3, 23]). The imaging system has a 1:1 magnification in both transverse and longitudinal dimensions so the geometry of the problem is rather simple.

### METHODS

To demonstrate this new approach for single-shot d-scan, we perform temporal characterization of a commercial chirped pulse amplification laser (Pharos, Light Conversion), which was configured to deliver 170 fs pulses around 1030 nm, at a repetition rate of 5 kHz and with pulse energy in the range of 50-200 µJ. Measurement in two different pulse duration regimes was possible through the implementation of pulse post-compression based on a multi-pass cell (MPC), which allowed us to measure shorter pulses in the range of 50-100 fs.

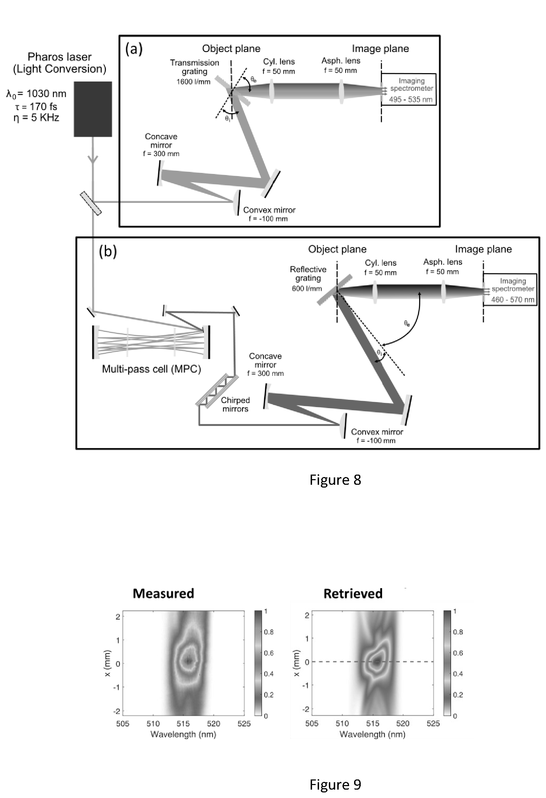

*Setup to measure post-compressed pulses after multi-pass cell (50-100* fs*):* A preferential embodiment of the application of the spatially-dependent varying dispersion system is illustrated in Figure 8b. This figure also shows the Pharos laser and a multi-pass cell. Two thin pieces of bulk fused silica in the MPC give sufficient nonlinearity to broaden the pulse spectrum via self-phase modulation in every roundtrip through the cell. Varying the input pulse energy allows us to produce pulses with a tunable pulse duration in the range of 50-100 fs. Dispersion management is performed via chirped mirrors introducing -200fs² of GDD per bounce. In total, eight bounces were implemented.

In order to achieve a uniform intensity profile over a 10 mm aperture, the beam is expanded by a factor of 3 using a mirror telescope. After expansion, the beam is sent into the single-shot preferential implementation. With an angle of incidence of *θᵢ* = 9°, the beam is sent onto a reflective grating with a line density of 600 lines/mm. We use the +1 order corresponding to a diffracted angle of *θ*₁ = 50°. In this configuration, the diffracted beam features a spatially-dependent dispersion covering a range of approximately 15000 fs² over its aperture. Two lenses, one cylindrical (*f* = 50mm) and one aspherical (*f* = 50mm), are used to image the diffracted beam from the grating onto a 5 µm thick BBO crystal. The combination of lenses performs imaging in a plane parallel to the optical table, in which the angular spread from the grating occurs. In the orthogonal plane, the aspherical lens focuses the collimated light rays into a horizontal line, precisely where the BBO crystal is located. In the crystal, a second harmonic signal is generated and its spectrum is spatially resolved with an imaging spectrometer. The imaging spectrometer was built following a crossed Czerny-Turner geometry, using two concave spherical mirrors with focal lengths of 100 mm each and a reflection grating with 600 lines/mm.

Using this preferential arrangement, we can record a single shot d-scan trance, i.e., SHG spectrum vs. dispersion, by synchronizing the acquisition time of the camera with the repetition rate of the laser. From the theoretical model of angular dispersion calculation, this grating configuration results in a variation in GDD and TOD of 2129 fs²/mm and -8012 fs³/mm, respectively, along the crystal axis, located at the image plane.

*Setup to measure pulses from the output of the Pharos laser (170* fs*):* As in the previous setup, the pulses to be characterized originate from a commercial chirped pulse amplification laser (Pharos, Light Conversion). In this case, the laser settings were slightly different with a higher repetition rate of 210 kHz and a lower pulse energy of 33 µJ. Since the output of the laser was already optimally compressed, additional dispersion compensation was not necessary. The beam path from the Pharos laser to the single-shot pulse measurement setup is schematically shown in Figure 8a.

Measurement of 170 fs pulses requires a dispersion range greater than 100,000 fs². This was achieved using a transmission grating with 1600 lines/mm, designed to achieve highest efficiency for an angle of incidence of 55*.*1° (Littrow configuration). In our measurements we estimated the angle of incidence to be 52*.*8°, resulting in a diffracted beam with spatially varying dispersion covering approximately 130,000 fs² over its aperture. From our model of angular dispersion, the grating configuration results in a variation in GDD and TOD of 29,236 fs²/mm and -303,590 fs³/mm, respectively, along the crystal axis.

Because of the longer pulse duration, the bandwidth of the laser is smaller, putting much higher demands on the spectral resolution of the imaging spectrometer. This was achieved by replacing the imaging spectrometer 600 lines/mm grating by one with 1200 lines/mm. Measured and retrieved traces are shown in Figure 9.

### Results of pulse characterization with the grating single-shot system

### Measurement and retrieval of pulses after MPC (50-100 fs)

Traces were recorded for different pulse durations by varying the input pulse energy into the MPC. Figure 9 shows an example of a measured single-shot trace, where the vertical axis corresponds to the position in the object plane and the horizontal axis to the second harmonic spectrum. A beam size of 7*.*3 mm is imaged onto the BBO crystal, which corresponds to a dispersion range of 15,500 fs².

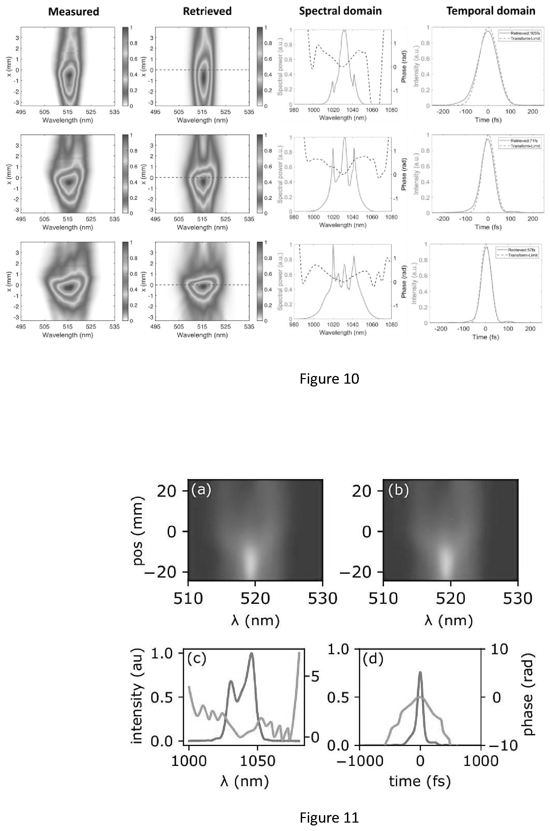

To demonstrate the retrieval of the experimental traces, a phase-only retrieval algorithm was used where the grating phase was included as a Taylor expansion up to 3rd order. Figure **10** shows the measured and retrieved single-shot traces for different pulse durations in the range between 100 and 50 fs.

### Measurements with the scanning system:

Our setup consists of a PHAROS laser (Light Conversion UAB) delivering pulses with about 190 fs duration FWHM with a spectrum centered at around 1040 nm with an energy of around 30*µ*J per pulse. We use a multipass cell (MPC) system consisting of two broadening and compression stages. The first stage broadens and compresses the pulses down to 40 fs and the second stage can go as short as 7 fs. The system built to measure these pulses uses a grating of 300 lines /mm, and introduces a GDD of around 360fs²/mm of grating translation. A translation of 50 mm gives a total GDD scanning range of over 18kfs² which is enough to measure the output of stage 1 even before optimization, as Figure 11 shows.

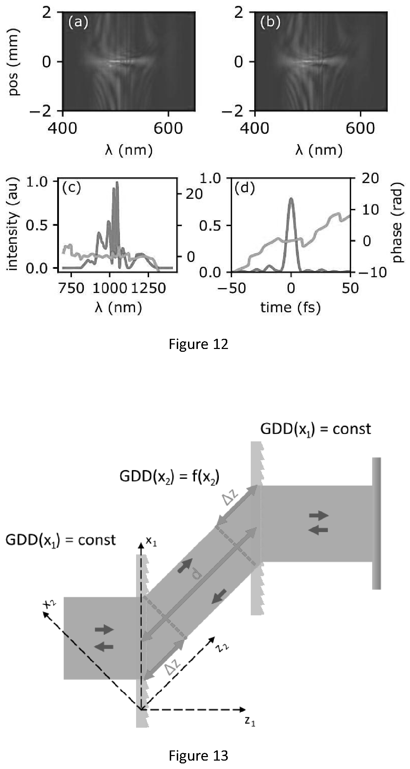

The same setup was used to measure the second stage compressor (see Fig.12), providing measurements of pulse durations with 7 fs Fourier Limited duration.

The only differences between Figure 11 and Figure 12 is the scanning and wavelength ranges of the scan. With the same scanning system it is possible to measure form 7fs up to 100fs (Fourier Limited durations) of a laser pulse.

### New method for single-shot pulse measurement based on angular dispersion

With the results presented, we have demonstrated a new single-shot system which uses a single diffraction grating to encode a spatially varying spectral phase. The amount of GDD introduced by the grating significantly increases the achievable dispersion range compared to using material dispersion. Thanks to this, we have been able to measure pulses with the same optical implementation from 50 to a 180 fs, (180 fs at 1030 nm), which is the longest pulse ever measured with a singleshotdispersion scan implementation. This method has the potential to measure even longer pulses using more dispersive gratings and larger beam sizes. In addition to this, the presence of an imaging system gives us access to a plane in which there is no dispersion offset. Thus, this method does not require elements for dispersion pre-compensation such as chirped mirrors, necessary in all other single-shot dispersion scan implementations.

Looking forward, one of the challenges of measuring longer pulses with single-shot dispersion scans is having an imaging spectrometer that can adequately resolve the spectrum. During our experiments, the demand for high spectral resolution in a 10 nm bandwidth was difficult to meet with our home-made imaging spectrometer, which is part of the reason why our measured traces did not match sufficiently well the retrieved traces. This issue can be addressed with new imaging spectrometer designs, more suitable for the longer pulse durations that can be measured with this new method.

We are also aware that the presence of imaging distortions can affect the measuredtraces and must be corrected or accounted for in simulations. We are working on quantifying the effect of an aberrated 4f-imaging system on the measured trace so that we can implement a solution for this in the future.

### 6.2. New insights into the spatio-temporal dispersion from a diffraction grating

To our knowledge, this is the first work where the spatially varying dispersion due to diffraction from a grating has been reported. Although smaller in magnitude, this effect is produced by any angularly dispersive element, such asa prism.

We think there are two main reasons why this effect has been overlooked in the past. All pulse stretchers and compressors based on angular dispersion rely on two parallel dispersers, such as gratings or prisms. As illustrated in figure 13, the spatially varying dispersion from the first grating will be canceled after the second one if the two gratings are parallel and identical to each other.

Secondly, there are very few applications in ultrafast optics where pulse shaping is performed using a single grating. As we mentioned during the introduction, two such examples are the fields of temporal focusing microscopy and efficient terahertz generation. As we have discussed, when a diffracted optical pulse propagates in a direction not normal to the grating, spatially varying dispersion will lead to non-uniform pulse duration along a plane transverse to the propagation. This effect can play an important role in the interpretation of these experiments and should be taken into account.

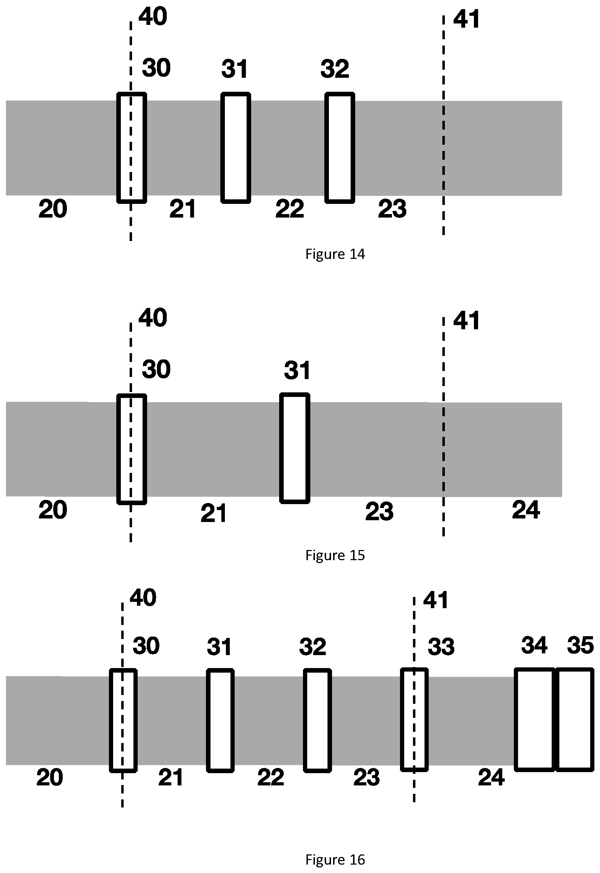

Figure 14 shows a graphic representation of an embodiment of the system for applying a spatially-dependent dispersion, wherein 20 is the laser pulse beam, 21-23 represents the laser pulse beam propagating in the imaging system, 30 represents the dispersive optical element, 31 represents a focusing optical element, 32 represents a focusing optical element, 40 represents the object plane of the imaging system and 41 represents the image plane of the imaging system. This implementation allows applying spatially-dependent dispersion to a laser pulse beam. If the dispersive optical element 30 is moved along the optical axis of the imaging system around to the object plane (40), this implementation also allows to apply a translation-dependent dispersion to the laser pulse beam.

Figure 15 shows a graphic representation of an embodiment of the system for applying a spatially-dependent dispersion, wherein 20 is the laser pulse beam, 21 and 23 represents the laser pulse beam propagating in the imaging system, 30 represents the dispersive optical element, 31 represents a focusing optical element, 40 represents the object plane of the imaging system and 41 represents the image plane of the imaging system.This implementation allows applying spatially-dependent dispersion to a laser pulse beam. If the dispersive optical element 30 is moved along the optical axis of the imaging system around to the object plane (40), this implementation also allows applying a translation-dependent dispersion to the laser pulse beam.

Figure 16 shows a graphic representation of an embodiment of a system for temporal measurement of a laser pulse beam, wherein 20 is the laser pulse beam, 21-23 represents the laser pulse beam propagating in the imaging system, 30 represents the dispersive optical element, 31 represents a focusing optical element, 32 represents a focusing optical element, 33 represents the nonlinear medium, 34 represents the detector and 35 represents the signal processor, 40 represents the object plane of the imaging system and 41 represents the image plane of the imaging system: This implementation provides the temporal measurement of a laser pulse beam, retrieving both the amplitude and phase of the electric field of the pulse beam. This temporal measurement can be implemented in single shot mode or scanning mode, by making the appropriate modifications according to the description of this invention.

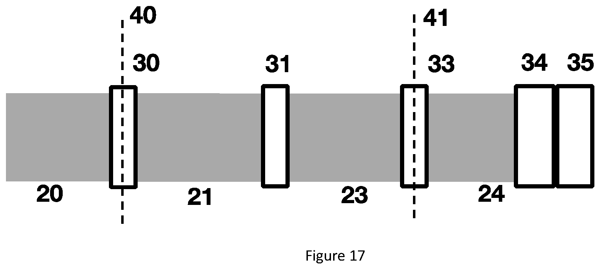

Figure 17 shows a graphic representation of an embodiment of a system for temporal measurement of a laser pulse beam, wherein 20 is the laser pulse beam, 21 and 23 represents the laser pulse beam propagating in the imaging system, 30 represents the dispersive optical element, 31 represents a focusing optical element, 32 represents a focusing optical element, 33 represents the nonlinear medium, 34 represents the detector and 35 represents the signal processor, 40 represents the object plane of the imaging system and 41 represents the image plane of the imaging system, this implementation also allows the temporal measurement of a laser pulse beam, retrieving both the amplitude and phase of the electric field of the pulse beam. This temporal measurement can be implemented in single shot mode or scanning mode, by making the appropriate modifications according to the body of this invention.

The term "comprising" whenever used in this document is intended to indicate the presence of stated features, integers, steps, components, but not to preclude the presence or addition of one or more other features, integers, steps, components, or groups thereof.

Diagrams of particular embodiments of the presently disclosed methods are depicted in figures. The diagrams illustrate the functional information one of ordinary skill in the art requires to perform said methods or systems required in accordance with the present disclosure.

It will be appreciated by those of ordinary skill in the art that unless otherwise indicated herein, the particular sequence of steps described is illustrative only and can be varied without departing from the disclosure. Thus, unless otherwise stated, the steps described are so unordered meaning that, when possible according to the disclosure, the steps can be performed in any convenient or desirable order.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

The following references, should be considered herewith incorporated in their entirety:
[1] T. Gaylord and M. Moharam, "Analysis and applications of optical diffraction by gratings," Proc. IEEE 73, 894-937 (1985). Conference Name: Proceedings of the IEEE.
[2] A. M. Weiner, "Ultrafast optical pulse shaping: A tutorial review," Opt. Commun. 284, 3669-3692 (2011).
[3] E. Treacy, "Optical pulse compression with diffraction gratings," IEEE J. Quantum Electron. 5, 454-458 (1969). Conference Name: IEEE Journal of Quantum Electronics.
[4] O. E. Martinez, "Grating and prism compressors in the case of finite beam size," JOSA B 3, 929-934 (1986). Publisher: Optica Publishing Group.
[5] O. E. Martinez, "Pulse distortions in tilted pulse schemes for ultrashort pulses," Opt. Commun. 59, 229-232 (1986).
[6] S. Akturk, X. Gu, E. Zeek, and R. Trebino, "Pulse-front tilt caused by spatial and temporal chirp," Opt. Express 12, 4399-4410 (2004). Publisher: Optica Publishing Group.
[7] E. Papagiakoumou, E. Ronzitti, and V. Emiliani, "Scanless two-photon excitation with temporal focusing," Nat. Methods 17, 571-581 (2020). Publisher: Nature Publishing Group.
[8] G. Tóth, G. Polónyi, and J. Hebling, "Tilted pulse front pumping techniques for efficient terahertz pulse generation," Light. Sci. & Appl. 12, 256 (2023). Publisher: Nature Publishing Group.
[9] M. Miranda, T. Fordell, C. Arnold, A. L'Huillier, and H. Crespo, "Simultaneous compression and characterization of ultrashort laser pulses using chirped mirrors and glass wedges," Opt. Express 20, 688-697 (2012). Publisher: Optica Publishing Group.
[10] M. Miranda, C. L. Arnold, T. Fordell, F. Silva, B. Alonso, R. Weigand, A. L'Huillier, and H. Crespo, "Characterization of broadband few-cycle laser pulses with the d-scan technique," Opt. Express 20, 18732-18743 (2012).
[11] I. Sytcevich, C. Guo, S. Mikaelsson, J. Vogelsang, A.-L. Viotti, B. Alonso, R. Romero, P. T. Guerreiro, J. Sola, A. L'Huillier, H. Crespo, M. Miranda, and C. L. Arnold, "Characterizing ultrashort laser pulses with second harmonic dispersion scans," J. Opt. Soc. Am. B 38, 1546 (2021).
[12] B. Alonso, Íñigo J. Sola, and H. Crespo, "Self-calibrating d-scan: measuring ultrashort laser pulses on-target using an arbitrary pulse compressor," Sci. Reports 8, 1-8 (2018). Publisher: Nature Portfolio.
[13] P. Repgen, A. Tajalli, D. Wandt, J. Neumann, D. Kracht, and U. Morgner, "Complete characterization of ultrafast pulses of an Yb-doped fiber amplifier via dispersion scans after compression in a grism compressor (Conference Presentation)," in Fiber Lasers XV: Technology and Systems, vol. 10512 (SPIE, 2018), p. 1051213.
[14] M. Liu, A. Tajalli, M. Fan, C. Mahnke, J. Zheng, and I. Hartl, "Optimization of the temporal quality of ultrafast pulses using dispersion scan based on tunable chirped fiber Bragg gratings," EPJ Web Conf. 267, 02023 (2022).
[15] V. Loriot, G. Gitzinger, and N. Forget, "Self-referenced characterization of femtosecond laser pulses by chirp scan," Opt. Express 21, 24879 (2013).
[16] D. Fabris, W. Holgado, F. Silva, T. Witting, J. W. G. Tisch, and H. Crespo, "Single-shot implementation of dispersion-scan for the characterization of ultrashort laser pulses," Opt. Express 23, 32803-32808 (2015). Publisher: Optica Publishing Group.
[17] M. Louisy, C. Guo, L. Neoričić, S. Zhong, A. L'Huillier, C. L. Arnold, and M. Miranda, "Compact single-shot d-scan setup for the characterization of few-cycle laser pulses," Appl. Opt. 56, 9084 (2017).
[18] F. J. Salgado-Remacha, B. Alonso, H. Crespo, C. Cojocaru, J. Trull, R. Romero, M. López-Ripa, P. T. Guerreiro, F. Silva, M. Miranda, A. L'Huillier, C. L. Arnold, and J. Sola, "Single-shot d-scan technique for ultrashort laser pulse characterization using transverse second-harmonic generation in random nonlinear crystals," Opt. Lett. 45, 3925 (2020).
[19] A. Korobenko, P. Rosenberger, J. Schötz, A. Y. Naumov, D. M. Villeneuve, M. F. Kling, A. Staudte, P. B. Corkum, and B. Bergues, "Single-shot dispersion sampling for optical pulse reconstruction," Opt. Express 29, 11845-11853 (2021).
[20] F. Capdeville, F. Villanueva, D. Hidalgo-Rojas, F. Wahaia, R. A. Wheatley, S. Wallentowitz, U. Volkmann, and B. Seifert, "Multiple-reflections single-shot dispersion scan for fast ultrashort-pulse measurements," Opt. Express 32, 28742 (2024).
[21] S. Akturk, X. Gu, P. Bowlan, and R. Trebino, "Spatio-temporal couplings in ultrashort laser pulses," J. Opt. 12, 093001 (2010).
[22] O. E. Martinez, J. P. Gordon, and R. L. Fork, "Negative group-velocity dispersion using refraction," JOSA A 1, 1003-1006 (1984). Publisher: Optica Publishing Group.
[23] U. Keller, Ultrafast Lasers: A Comprehensive Introduction to Fundamental Principles with Practical Applications (Springer International Publishing, 2021).
[24] G. Cheriaux, P. Rousseau, F. Salin, et al., "Aberration-free stretcher design for ultrashort-pulse amplification," Opt. Lett. 21, 414-416 (1996).

## Claims

1. An optical system for applying variable large amounts of dispersion to a laser pulse beam, either in parallel over the laser pulse beam, or sequentially to a portion of the laser pulse beam.

2. The optical system according to claim 1, wherein the variable large amounts of dispersion are applied in parallel along the spatial profile of the laser pulse beam so as to introduce a spatially dependent dispersion along said laser pulse beam.

3. The optical system according to the previous claim wherein applying in parallel variable large amounts of dispersion along the laser pulse beam so as to introduce a spatially dependent dispersion to said laser pulse beam, is produced between an input surface and an output surface of said optical system.

4. The optical system according to the previous claims, comprising
- a dispersive optical element for introducing angular dispersion to the laser pulse beam;
- an imaging section with its optical axis aligned with the propagation direction of the angularly dispersed laser pulse beam, that images an object plane into an image plane, wherein the object and image planes are parallel with respect to each other, perpendicular to the optical axis of said imaging section, and related by an optical imaging relationship.

5. The optical system according to the previous claim wherein the dispersive optical element comprises one or more surfaces where angular dispersion of the laser pulse beam occurs.

6. The optical system according to the previous claim, wherein the first surface of the dispersive optical element where angular dispersion occurs, is deliberately positioned at a non-zero angle with respect to the object plane, thereby generating a non-trivial, spatially dependent dispersion in the laser pulse beam along an output surface coaxial with the optical axis of the imaging section and hence locally parallel to the image plane.

7. The optical system according to the previous claim, wherein the first surface of the dispersive optical element where angular dispersion occurs is parallel to the object plane, thereby generating a non-trivial, spatially dependent dispersion in the laser pulse beam along an output surface non-coaxial with the optical axis of the imaging section and hence locally tilted with respect to the image plane.

8. The optical system according to the previous claims wherein the dispersive optical element comprises a flat transmissive diffraction grating, flat reflective diffraction grating, curved transmissive diffraction grating, curved reflective diffraction grating, circular grating, diffractive axicon, prism, grism, wedge, plate, and combinations thereof.

9. A system for single-shot temporal measurement of a laser pulse beam, said system comprising:
- an optical system according to previous claims 1-8, or combinations thereof, for applying spatially dependent dispersion to the laser pulse beam along an output surface;
- a nonlinear section for applying in parallel a nonlinear optical process to the laser pulse beam along the output surface of the previous optical system, to obtain a dispersion-dependent nonlinear signal;
- a sensor for recording in single-shot, by an analyzing means, the two-dimensional dataset comprising the spectra of the dispersion-dependent nonlinear signal of the previous nonlinear section as a function of position;
- a processing module comprising one or more processors configured for executing a numerical iterative algorithm, to said recorded single-shot two-dimensional dataset to retrieve the phase and, optionally, the amplitude of the electric field of the laser pulse beam.

10. A method for introducing, in parallel, a spatially dependent dispersion to a laser pulse beam, said method comprising:
- introducing angular dispersion to the laser pulse beam via an optical means, wherein said angular dispersion occurs either (i) in transmission at a surface traversed by the laser pulse beam, or (ii) in reflection at a surface upon which the laser pulse beam impinges;
- imaging an object plane onto an image plane, said planes being perpendicular to the axis defined by the propagation of the angularly dispersed laser pulse beam, thereby producing a spatially dependent dispersion in said laser pulse beam along a surface, wherein said spatially dependent dispersion arises when the optical means and/or the surface are tilted with respect to the object plane and the image plane, respectively;
- selecting the range and sign of the introduced dispersion to be entirely negative, entirely positive, or varying from negative to positive, or vice versa, by adjusting the signed distance and angle between the object plane and the surface at which angular dispersion is introduced, with said distance being measured along the axis defined by the propagation of the angularly dispersed laser pulse beam.

11. A method for single-shot temporal measurement of a laser pulse beam, said method comprising the following steps:
- introducing a spatially dependent dispersion to the laser pulse beam along a surface, according to the method described in the previous claim;
- applying a nonlinear optical process to the beam resulting from the previous step along said surface;
- recording a two-dimensional dataset in single-shot, said dataset comprising the spectrum of the nonlinear signal generated for each different spatially dependent dispersion in the laser pulse beam; and
- calculating, by an electronic data processor, a numerical iterative algorithm to said recorded single-shot two-dimensional dataset to retrieve the phase and, optionally, the amplitude of the electric field of the laser pulse beam.

12. An optical system according to previous claims 1-5 and 8, for introducing variable large amounts of dispersion, sequentially to a laser pulse beam, said optical system comprising a means for translating the imaging section along its optical axis, thereby generating a translation-dependent dispersion at the output surface of said optical system for each position of said imaging section.

13. An optical system according to previous claims 1-5 and 8, for introducing variable large amounts of dispersion, sequentially to a laser pulse beam, said optical system comprising a means for translating the dispersive element along the optical axis of the imaging section, thereby generating a translation-dependent dispersion at the output surface of said optical system for each position of said dispersive element.

14. A system for temporal measurement of a laser pulse beam, said system comprising:
- the optical system according to previous claims 12 and 13, for applying translation-dependent dispersion to the laser pulse beam;
- a nonlinear section for applying a nonlinear optical process to the laser pulse beam at the output surface of the previous optical system;
- a sensor for recording, sequentially, by an analyzing means, the two-dimensional dataset comprising the spectra of the translation-dependent nonlinear signal of the previous nonlinear section for each position of the imaging section or the dispersive optical element in said optical system;
- a processing module comprising one or more processors configured for executing a numerical iterative algorithm, to said recorded two-dimensional dataset, to retrieve the phase and, optionally, the amplitude of the electric field of the laser pulse beam.

15. A method for introducing, sequentially, variable dispersion to a laser pulse beam, said method comprising:
- introducing angular dispersion to the laser pulse beam via an optical means, wherein said angular dispersion occurs either (i) in transmission at a surface traversed by the laser pulse beam, or (ii) in reflection at a surface upon which the laser pulse beam impinges;
- imaging an object plane onto an image plane, said planes being perpendicular to the axis defined by the propagation of the angularly dispersed laser pulse beam;
- adjusting, sequentially, the signed distance between the object plane and the surface at which angular dispersion is introduced, with said signed distance being measured along the axis defined by the propagation of the angularly dispersed laser pulse beam, to produce a translation-dependent dispersion in said laser pulse beam along a surface, wherein the range and sign of the introduced dispersion can be made entirely negative, entirely positive, or varying from negative to positive, or vice versa, by adjusting said signed distance.
